# EUROPEAN PATENT APPLICATION

(11) **EP 1 089 466 A1**
(43) Date of publication of application: **04.04.2001**
(21) Application number: 99307661.1
(22) Date of filing: 28.09.1999
(51) Int. Cl.: H04B 10/10

(54) **Infra-red link**

(71) Applicant: LUCENT TECHNOLOGIES INC., Murray Hill, New Jersey 07974-0636 (US)
(72) Inventor: Cook, Christine Dorothy, Winchester, Hampshire SO23 7RB (GB); Odam, Graham Andrew, Winchester, Hampshire SO22 4NS (GB)
(74) Representative: Williams, David John

(57) **Abstract**

There is disclosed a method of maintaining an infra-red data link between first and second terminals, wherein establishment of the infra-red data link is indicated by the first terminal sending a data request signal and, responsive thereto, receiving a data acknowledgement signal from the second terminal within a predetermined time period, wherein if the data acknowledgement signal is not received within the predetermined time frame the first terminal sends a request to re-establish the data link. Circuitry for implementing the method is also disclosed.

## Description

### Field of the Invention

The present invention is related to the maintenance of infra-red data links between two or more devices.

### Background to the Invention

Infra-red (IR) links are used to provide a communication channel for the exchange of information over short distances. Such information may be simple commands such as 'on' or'off', or may be a more complex set of data. It is generally the case, when IR links are used to provide a communication channel, that the IR link is guaranteed for a sufficient length of time to allow the necessary communication of information to take place. That is, if two devices or terminals are interconnected by an IR link, conventional infra-red techniques assume that the two devices will remain in infra-red communication for the duration of the information exchange. The Infra-Red Data Association 'Serial Infra-Red Link Access Protocol (IrLAP)' is an example of a technique in which such an assumption is made.

Infra-red communication is operable over only relatively short distances (relative to, for example, radio communication). With increased use of mobile devices in all aspects of technology, it is difficult to guarantee the integrity of an IR link for a given period of time.

As IR links between devices are only supported over short distances, then the likelihood of an IR link being broken by movement of a particular device outside of IR range increase when a device supporting an IR link is a mobile device. Thus, one problem that may arise is that an established IR link may be broken by one of the devices being moved out of IR range. One characteristic of mobile devices is that it is desirable to minimise power consumption to extend battery life. One way of minimising power consumption is to provide mobile devices with a 'power-down' mode of operation. In a power-down mode, the main functionality of the device is powered down, and only 'woken-up' for short time intervals to see if full operations should be resumed. This creates a second problem, in that the powering down of a device results in an established IR link being lost. Conventional infra-red techniques and standards do not provide for the handling of both of such breakdowns in IR links.

It is therefore an object of the present invention to provide an improved technique for supporting an infra-red link.

### Summary of the Invention

According to the present invention there is provided a method of maintaining an infra-red data link between first and second terminals, wherein establishment of the infra-red data link is indicated by the first terminal sending a data request signal and, responsive thereto, receiving a data acknowledgement signal from the second terminal within a predetermined time period, wherein if the data acknowledgement signal is not received within the predetermined time frame the first terminal sends a request to re-establish the data link.

The infra-red link may conform to the IRDA protocol. The data request signal and the data acknowledgement signals may comprise messages. Responsive to an acknowledgement to the request to re-establish the data link from the second terminal, the first terminal may send a data request signal.

The data request and data acknowledgement signals may be 'ready to receive' data signals.

The first terminal may have a low-power mode of operation in which the first terminal is active for fixed time period within a fixed time interval, wherein the data request signal or the request to re-establish the data-link is sent within the fixed time period.

According to the present invention there is also provided a terminal having an infra-red link for communication with at least one other terminal, and including output circuitry for transmitting a data request signal to the other terminal; and input circuitry for receiving a data acknowledgement signal from the other terminal, the establishment of an infra-red link between the terminals being indicated by receipt, within a predetermined time interval, of a data acknowledgement signal responsive to a request signal, wherein the terminal is controlled by a control circuit such that if the input circuitry does not receive the data acknowledgement signal within the predetermined time period, the output circuitry is controlled to generate a request to re-establish the data link.

The infra-red data link may conform to the IRDA protocol. The request and acknowledgement signals may be messages.

Responsive to the input circuitry receiving an acknowledgement to the request to re-establish the data link, the output circuitry may be controlled to generate a data ready signal.

The terminal may be controlled by a control circuit in a low-power mode of operation such that it is active for a fixed time period within a fixed time interval, the output circuitry being controlled to generate the request signal in the fixed time period.

The output circuitry may be controlled to generate a request to re-establish the link in the fixed time period if the input circuitry does not receive the acknowledgement signal within the predetermined time period.

The output circuitry may be controlled to continue to generate a request to re-establish the link in successive fixed time periods if an acknowledgement to the request to re-establish the link is not received. The invention will now be described with reference to an exemplary embodiment by way of example to the accompanying drawings in which:

### Brief Description of the Drawings

Figure 1 illustrates an exemplary implementation of two terminals in which the present invention may be utilised;
Figure 2 illustrates a more detailed embodiment of the implementation of Figure 1;
Figure 3 illustrates a sequence of events for illustrating the application of the present invention;
Figure 4 illustrates an exemplary operation of one of the terminals of Figure 1;
Figure 5 illustrates an exemplary operation of the other of the terminals of Figure 1; and
Figure 6 illustrates a further exemplary operation of one of the terminals of Figure 1.

### Description of Preferred Embodiment

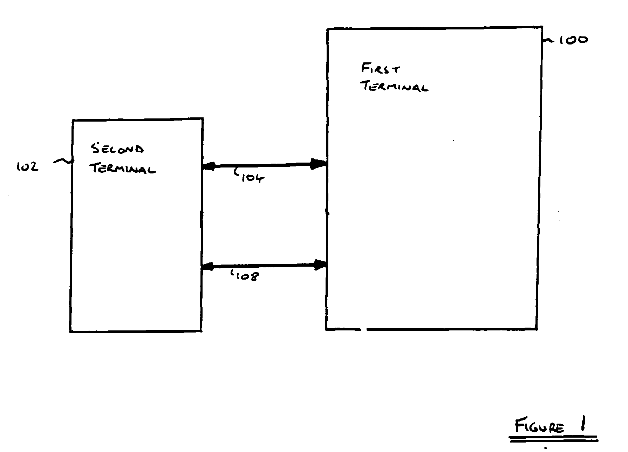

Figure 1 illustrates an example of two terminals interconnected by an infra-red data link, and the other types of link which may exist in an exemplary application. In Figure 1 a first terminal 100, or primary station, is connectable to a second terminal 102, or secondary station, by a number of interconnections 104 and 108. In this exemplary implementation the second terminal may be a cordless telephone handset, and the first terminal may be a docking station for the cordless telephone handset.

In such an implementation, the interconnections between the first and second terminal may include an infra-red data link and a power link. In Figure 1 the interconnection 104 represents the infra-red data link and the interconnection 108 represents the power link. The infra-red data link supports the communication of control information between the cordless telephone handset and the docking station. The power link enables a rechargeable battery in the cordless telephone handset to be recharged when the handset is docked in the docking station. In this exemplary implementation, a radio link is established between the cordless telephone handset and a further radio station, not shown in Figure 1.

The present invention is not limited to an application such as shown in Figure 1, which is included for purposes of example only. The invention could apply equally, for example, in an arrangement in which a radio link is provided between the cordless handset and the desk set. Broadly, the invention may be applied in any environment in which an infra-red data link is provided for.

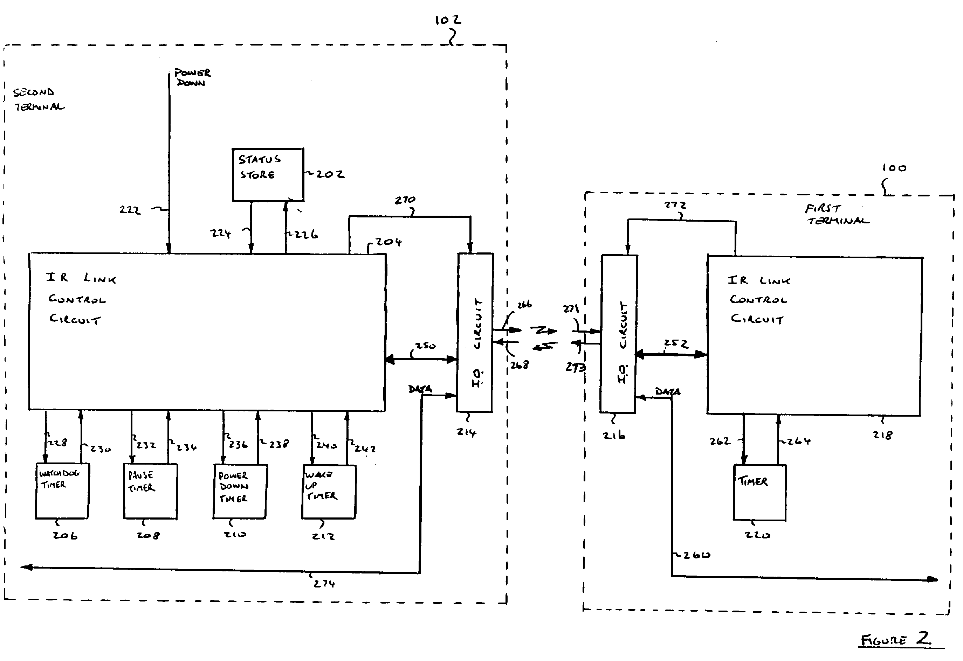

Figure 2 illustrates the main elements of the functional blocks in both the first and second terminals for supporting the infra-red data link between the two terminals. The two terminals will obviously include significant further functionality to support other operations, which are outside the scope of the present invention. The implementations of the first and second terminal functionality shown in Figure 2 is included by way of example for illustrating the present invention, and is not in any way limiting or representative of elements which are essential to implement the present invention.

Referring to Figure 2, the first terminal 100 comprises an IR link control circuit 218, an input/output circuit 216, and a timer 220. The IR link control circuit 218 provides control signals on line 272 to the input/output circuit 216. The IR link control circuit is connected to the input/output circuitry 216 via a bi-directional serial link 252. In operation, as will be described further hereinbelow, the IR link control circuit 218 generates 'ready to receive' messages RR, and 'start normal response mode' messages SNRM on bi-directional serial link 252, both of which messages form inputs to the input/output circuitry 216. The IR control circuit 218 receives 'ready to receive' data messages RR and 'request normal response mode' messages RNRM on the bi-directional serial link252 from the input/output circuitry 216. The timer 220 receives a control signal on line 262 from the IR link control circuit 218, and generates a control signal on line 264 to the IR link control circuit 218. The input/output circuitry 216 generates infra-red signals on output line 273, and receives infra-red signals on output line 271.

Referring further to Figure 2, the second terminal 102 comprises an IR link control circuit 204, an input/output circuit 214, a watchdog timer 206, a pause timer 208, a power down timer 210, and a wake-up timer 212. The IR link control circuit 204 provides control signals on line 270 to the input/output circuit 214. The IR link control circuit 204 is connected to the input/output circuit 214 via a bi-directional serial link 250. The IR control circuit 204 generates 'ready to receive' data messages RR and 'request normal response mode' messages RNRM on bi-directional serial link 250, both of which messages form inputs to the input/output circuitry 214. The IR link control circuit 204 receives ready to receive' data messages RR and 'start normal response mode' messages SNRM from the input/output circuitry 214 on bi-directional serial link 250. The watchdog timer 206, the pause timer 208, the power down timer 210, and the wake-up timer 212 each generate a respective control signal to the IR link control circuit 204 on lines 230, 234, 238, and 242 respectively. The watchdog timer 206, the pause timer 208, the power down timer 210, and the wake-up timer 212 each receive a respective control signal from the IR link control circuit 204 on lines 228, 232, 236, and 240 respectively. The input/output circuitry 214 generates infra-red signals on output line 266, and receives infra-red signals on input line 268.

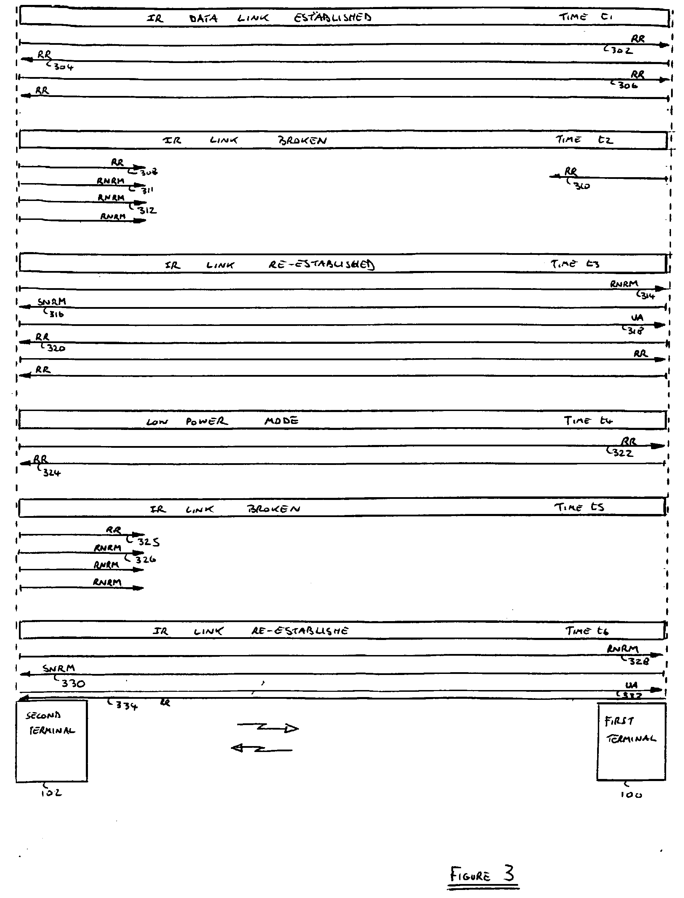

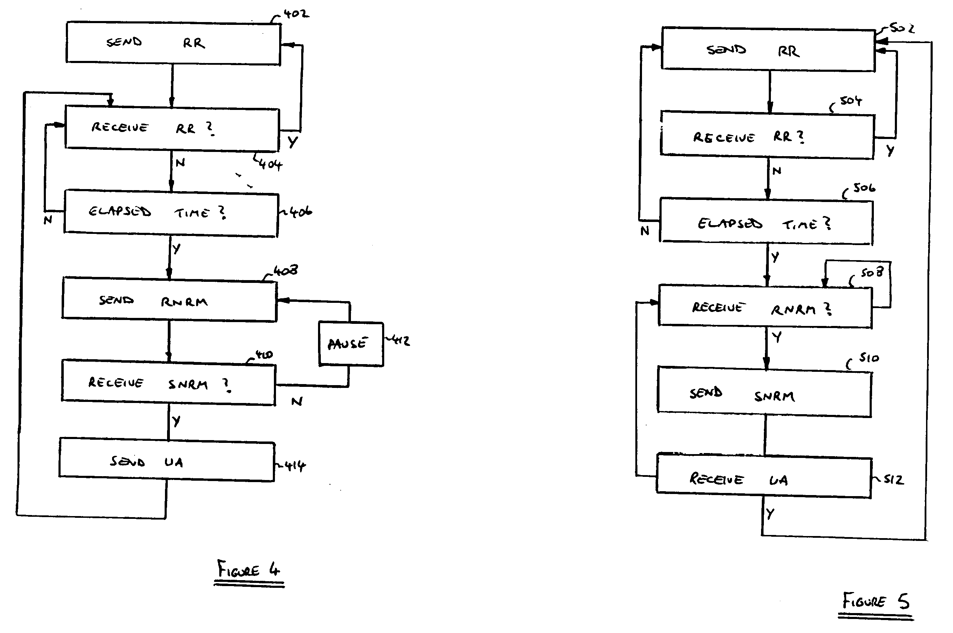

The diagram of Figure 3 represents the signalling of messages between the first and second terminals in various modes of operation. The present invention in the various modes of operation will now be described with reference to Figures 2 and 3, and the flow diagrams of Figure 4 to 6.

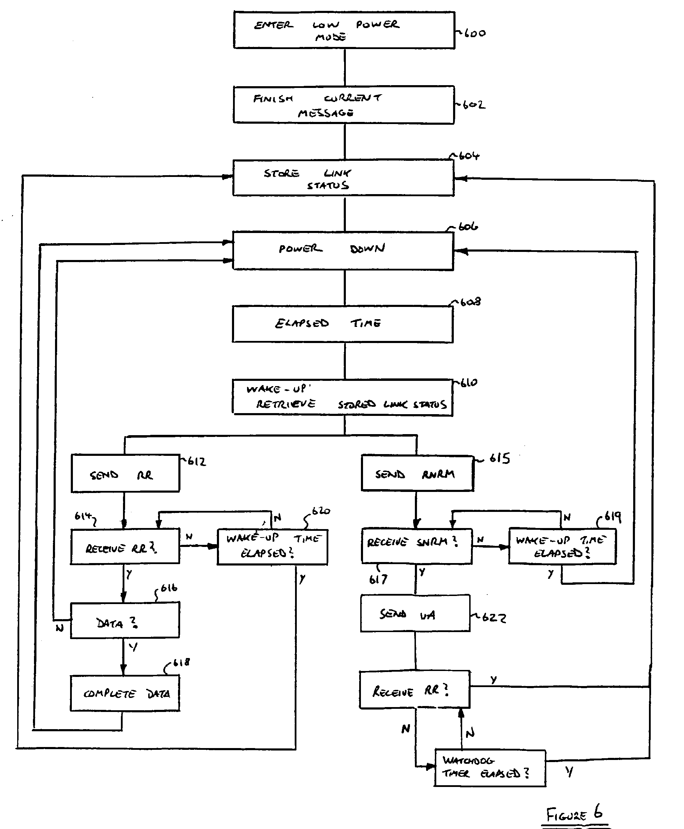

Referring to Figure 3, at a time tl the IR data link between the two terminals is established. The flow diagram of Figure 4 illustrates the main functional steps performed by the second terminal, and the flow diagram of Figure 5 illustrates the main functional steps performed by the first terminal.

In a step 402, the second terminal sends a 'ready to receive' data message RR as illustrated by arrow 302. In a step 504 the first terminal receives the 'ready to receive' data message, and then in a step 502 itself sends a 'ready to receive' data message RR as illustrated by arrow 304. The second terminal receives the 'ready to receive' data message in a step 404 and in a step 402 sends a further 'ready to receive' data message indicated by arrow 306. Thus the first terminal cycles through the steps 502 and 504, and the second terminal cycles through the steps 402 and 404. This sequence continues provided each terminal receives a 'ready to receive' data message within a predetermined time period.

Referring to Figure 2, the IR link control circuit 204 generates the 'ready to receive' data message RR on link 250 to the IO circuitry 214, and receives the 'ready to receive' data message RR on link 250 from the IO circuit 214. The IO circuit is further controlled by a control signal on line 270 from the IR link control circuit 204 to input and output the appropriate signals. The IR link control circuit 218 similarly generates the 'ready to receive' data message RR on link 252 to the IO circuitry 216, and receives the 'ready to receive' data message RR on link 252 from the IO circuit 216. The IO circuit is further controlled by a control signal on line 272 from the IR link control circuit 218 to input and output the appropriate signals.

Referring to Figure 3, at a time t2 the second terminal moves out of IR range of the first terminal, and the IR data link is consequently broken. In step 402 the second terminal sends a 'ready to receive' data message RR as indicated by arrow 308, responsive to the last 'ready to receive' data message received from the first terminal. On this occasion the first terminal receives no reply from the second terminal within an expected time frame, and proceeds on to step 506.

In step 402 the IR link control circuit 204 sets the timer 206, which is a watchdog timer, via line 228 to begin counting. Then the second terminal moves to step 404 and checks whether a reply is received from the first terminal. After the watch dog timer reaches its limit, as indicated by the signal on line 230 being set, the second terminal moves onto a step 408.

At the same time in step 502 the first terminal sends a 'ready to receive' data message as indicated by arrow 310, responsive to the last received 'ready to receive' data message from the second terminal. Each time the first terminal sends a 'ready to receive' data message, the timer 220 is set via line 262. If in step 5d4 a 'ready to receive' data message is not received from the second terminal, then the first terminal checks in step 506 whether an elapsed time has passed. If the elapsed time has not expired (i.e. the output of the timer on line 264 has not been set), then the first terminal returns to step 502 and continues to send ready to receive' data messages. When the elapsed time expires, as indicated by the signal on line 264 being set, the first terminal moves onto a step 508.

In the step 408, the second terminal sends a request to re-establish the IR data link, in the form of a 'request normal response mode' RNRM message, as represented by the arrow 311. In a step 410 the second terminal then waits for a 'start normal response mode' SNRM message from the first terminal. On sending the RNRM message in step 408, the second terminal IR link control circuit sets the pause timer 208 via line 232. After a pause in step 412 for a fixed length of time indicated by the pause timer 208 setting the output signal 234, if the second terminal does not receive an acknowledgement from the first terminal then the second terminal sends a further RNRM message as represented by the arrow 312. The second terminal then repeats the steps 408, and 410 until an acknowledgement is received from the first terminal.

Referring to Figure 2, the second IR link control circuit 204 generates the RNRM message on link 250 to the IO circuitry 214, and receives the message SNRM on link 250 from the IO circuit 214. The first IR link control circuit 218 generates the message SNRM on link 252 to the IO circuitry 216, and receives the message RNRM on link 252 from the IO circuit 216.

After the elapsed time expires in step 506, as indicated by the output of the timer 220 on line 264 being set, the first terminal enters step 508 and waits for receipt of a RNRM message from the second terminal. If no RNRM message is received, then the first terminal remains in step 508. At a time t3 the second terminal moves back within IR range of the first terminal, and the IR data link can thus be re-established.

In response to receipt of the RNRM message represented by arrow 314 in step 508, the first terminal sends a SNRM message in step 510 as represented by arrow 316. Responsive to the SNRM message from the first terminal in step 410, the second terminal progresses to step 414 and sends a UA message, as indicated by arrow 318 and then moves to step 404. In step 512 the first terminal receives the UA message, progresses to step 502 and sends a ready to receive' data message, as indicated by arrow 320. Thus the first and second terminals revert to the cycling of 'ready to receive' data messages.

If after sending the SNRM message in step 510 the first terminal does not receive the UA message within a fixed time interval, the first terminal reverts to step 508.

At a time t4, the second terminal receives a command to enter a low power mode. The operation of the second terminal in low power mode is explained hereinbelow with additional reference to the flow diagram of Figure 6.

In a step 600, the second terminal receives a control signal indicating that the terminal is entering low-power, or power saving, mode. This control signal is generated from a central control means in the second terminal, and communicated to the second terminal IR link control circuit on line 222.

Responsive to the control signal on line 222, the second terminal IR link control circuit determines whether there is currently any data communication between the first and second terminals. If there is data communication taking place, then in a step 602 the second terminal waits for the data communication to terminate. The second terminal then proceeds to a step 604. If no data communication is taking place, then responsive to the control signal on line 222 the second terminal proceeds directly to step 604.

In step 604 the second terminal IR link control circuit 204 stores in the status store 202 via line 226 the current status of the IR link, i.e. whether there is a link established or not (i.e. whether the second terminal is within IR range of the first terminal or not). In this example, at the time of the power down instruction the second terminal is within range of the first terminal, and the status store is set accordingly via line 224.

In step 606, the IR link control circuit 204 enters the power down mode. In power down mode the IR link control circuit goes to 'sleep', but still wakes up for a fixed time at a fixed interval. When the IR link control circuit powers down it sets the power down timer 210 via line 236. A fixed time later the power down timer sets its output on line 238. Responsive to the signal on line 238 the second terminal wakes up for the fixed time. Responsive to the signal on line 238 the wake-up timer 212 is set via signal line 240. The wake-up timer counts a time period equivalent to the allowed wake-up time in power down mode.

Thus in a step 608 the elapsed power down time expires as indicated by the signal on line 238. The IR link control circuit wakes up in a step 610 and checks the status store value on line 224. If this indicated that prior to the power down the IR link was established then the control circuit moves onto step 612. If it indicates that prior to power down the IR link was broken, the control circuit moves onto step 615.

In the present example the IR link was established prior to power down, and in the step 612 the second terminal sends a 'ready to receive' data message, as indicated by arrow 322. Provided the first terminal is still within IR range then the second terminal receives a 'ready to receive' data message in step 614, as indicated by arrow 324.

In a step 616 the IR link control circuit determines whether there is any data to be transmitted. If there is then the IR link control circuit, in a step 618, stays awake for sufficient time to enable the data transfer to be completed. Thereafter the second terminal reverts to power down mode in step 606, and sets the power down timer via line 236. If data is transmitted, then this will exceed the allowed wake up time and it can therefore be assumed that wake up timer will have set its output 242 by the end of the data transmission.

If it is determined in step 616 that no data is to be transmitted, then the second terminal reverts to power down mode in step 606. Again, the time for a 'ready to receive' message to be sent and received will correspond to the time allowed for wake up.

If no 'ready to receive' data message is received in step 614, in a step 620 it is determined whether the allowed wake up time has expired as indicated by the signal on line 242 from timer 212 being set. If the time has expired the control circuit reverts to step 604 prior to power down, and updates the store status to indicate that the IR link has been lost. If the time has not expired, then the control circuit reverts to step 614.

Referring to Figure 3, at time t5 the second terminal moves out of IR range of the first terminal, and during the next wake-up time the 'ready to receive' data message sent in step 612, as indicated by the arrow 325, solicits no response during the wake-up time. Thus the status store is updated and the second terminal reverts to power down in step 604.

The next time the second terminal wakes up the IR link control circuit retrieves an indication that the IR link is lost in step 610, and proceeds to step 615. In step 615 the second terminal sends a RNRM message, as indicated by arrow 326. If no reply to the RNRM message is received in step 617 by the time the wake up timer sets its output on line 242 (as indicated by step 619), then the second terminal reverts to power down mode. This pattern is then repeated until the second terminal moves back within IR range of the first terminal at time t6.

As before in step 615 the second terminal sends the RNRM message as indicated by the arrow 328. Responsive to the RNRM message the first terminal sends the SNRM message as indicated by arrow 330, which is received by the second terminal in step 617. Responsive thereto, in step 622 the second terminal sends the UA message as indicated by arrow 332. The second terminal then sets the timer 206, which is a watchdog timer, via line 228 to begin counting. The wake up time will have expired in the time taken to receive the SNRM message and send the UA message. The second terminal then waits for the first terminal to send a 'ready to receive' message as indicated by arrow 334. The second terminal thus reverts to step 604 and stores the new link status in the status store dependent on the successful or otherwise reception of the 'ready to receive' message in step 621, and then reverts to power-down mode.

When power-down is ended, and the second terminal reverts to normal mode, then operation reverts to that described hereinabove with reference to Figures 4 and 5.

Although the invention has been described with reference to a particular implementation of an infra-red link between a cordless telephone handset and a complimentary desk set, it will be appreciated that the invention does in fact have broader applicability to any application where an infra-red link provides a communication channel between two or more devices.

## Claims

1. A method of maintaining an infra-red data link between first and second terminals, wherein establishment of the infra-red data link is indicated by the first terminal sending a data request signal and, responsive thereto, receiving a data acknowledgement signal from the second terminal within a predetermined time period, wherein if the data acknowledgement signal is not received within the predetermined time frame the first terminal sends a request to re-establish the data link.

2. The method of claim 1 in which the infra-red link conforms to the IRDA protocol.

3. The method of claim 1 or claim 2 wherein responsive to an acknowledgement to the request to re-establish the data link from the second terminal, the first terminal sends a data request signal.

4. The method of claim 1, claim 2 or claim 2 wherein the data request and data acknowledgement signals are 'ready to receive' data signals.

5. The method of any one of claims 1 to 4 in which the first terminal has a low-power mode of operation in which the first terminal is active for fixed time period within a fixed time interval, wherein the data request signal or the request to re-establish the data-link is sent within the fixed time period.

6. A terminal having an infra-red link for communication with at least one other terminal, and including output circuitry for transmitting a data request signal to the other terminal; and input circuitry for receiving a data acknowledgement signal from the other terminal, the establishment of an infra-red link between the terminals being indicated by receipt, within a predetermined time interval, of a data acknowledgement signal responsive to a request signal, wherein the terminal is controlled by a control circuit such that if the input circuitry does not receive the data acknowledgement signal within the predetermined time period, the output circuitry is controlled to generate a request to re-establish the data link.

7. The terminal of claim 6 in which the infra-red data link conforms to the IRDA protocol.

8. The terminal of claim 6 or 7, in which responsive to the input circuitry receiving an acknowledgement to the request to re-establish the data link, the output circuitry is controlled to generate a data ready signal.

9. The terminal of claim 6, claim 7 or claim 8 wherein the terminal is controlled by a control circuit in a low-power mode of operation such that it is active for a fixed time period within a fixed time interval, the output circuitry being controlled to generate the request signal in the fixed time period.

10. The terminal of claim 9 in which the output circuitry is controlled to generate a request to re-establish the link in the fixed time period if the input circuitry does not receive the acknowledgement signal within the predetermined time period.

11. The terminal of claim 10 in which the output circuitry is controlled to continue to generate a request to re-establish the link in successive fixed time periods if an acknowledgement to the request to re-establish the link is not received.
